# EUROPÄISCHE PATENTANMELDUNG

(11) **EP 2 921 625 A1**
(43) Veröffentlichungstag der Anmeldung: **23.09.2015**
(21) Anmeldenummer: 15153363.5
(22) Anmeldetag: 30.01.2015
(51) Int. Cl.: E05F 3/04, F16F 9/32, E05F 3/12, E05F 3/10, E05F 3/00, F16F 9/346, E05F 3/22

(54) **HYDRAULISCHER DÄMPFER MIT EINEM GEHÄUSE, INSBESONDERE FÜR EINEN TÜRSCHLIEßER**

(30) Priorität: 17.03.2014 DE 102014103580
(71) Anmelder: DORMA Deutschland GmbH, 58256 Ennepetal (DE)
(72) Erfinder: Gröne, Kai, 58256 Ennepetal (DE); Wildförster, Thomas, 58256 Ennepetal (DE)
(74) Vertreter: Balder IP Law, S.L.

(57) **Zusammenfassung**

Die vorliegende Erfindung betrifft einen hydraulischen Dämpfer mit einem Gehäuse, insbesondere für einen Türschließer. Um einen hydraulischen Dämpfer mit einem Gehäuse, insbesondere für einen Türschließer, bereit zu stellen, der einfach und kostengünstig herzustellen ist, ist erfindungsgemäß vorgesehen, dass das Gehäuse (2) frei von Steuerbohrungen und Hydraulikkanälen ist, und dass in das Gehäuse (2) ein Zwischenteil (3) eingesetzt ist, welches die Steuerbohrungen (3b) und die Hydraulikkanäle (3a) aufweist.

## Beschreibung

Die vorliegende Erfindung betrifft einen hydraulischen Dämpfer mit einem Gehäuse, insbesondere für einen Türschließer.

Türschließer verfügen üblicherweise über einen hydraulischen Dämpfer, der in den Türschließer integriert ist. Dabei dient das Gehäuse des Dämpfers als Zylinder, das die Steuerbohrungen, die Hydraulikkanäle usw. für den hydraulischen Dämpfer beinhaltet. Dies macht das Gehäuse teuer, da seine Herstellung aufwändig ist. Darüber hinaus setzen die Schließbereiche und die Funktionen an festgelegten Positionen an, da es sich um Steuerbohrungen im Gehäuse handelt. Auch müssen für unterschiedliche Ausstattungsvarianten verschiedene Dämpfer bereitgestellt werden, was wiederum eine Vielzahl unterschiedlicher Gehäusetypen nach sich zieht.

Es ist daher Aufgabe der vorliegenden Erfindung, einen hydraulischen Dämpfer mit einem Gehäuse, insbesondere für einen Türschließer, bereit zu stellen, der einfach und kostengünstig herzustellen ist.

Diese Aufgabe wird durch einen hydraulischen Dämpfer mit einem Gehäuse, insbesondere für einen Türschließer, erfindungsgemäß dadurch gelöst, dass das Gehäuse frei von Steuerbohrungen und Hydraulikkanälen ist, und dass in das Gehäuse ein Zwischenteil eingesetzt ist, welches die Steuerbohrungen und die Hydraulikkanäle aufweist.

Infolge dieser Ausgestaltung ist der erfindungsgemäße hydraulische Dämpfer leicht und kostengünstig herzustellen, da keine Hydraulikkanäle und/oder Steuerbohrungen in das Gehäuse eingebracht werden müssen. Diese können vielmehr von außen in das Zwischenteil eingebracht werden. Dies vereinfacht die Herstellung des erfindungsgemäßen Dämpfers, da bisher die Hydraulikkanäle in die Gehäusewandungen eingebracht werden mussten. Anschließend mussten die Steuerbohrungen entweder von innen gebohrt werden, oder sie müssen von außen gebohrt und dann wieder verschlossen werden. Dies ist infolge der erfindungsgemäßen Ausgestaltung nun nicht mehr erforderlich.

Die Unteransprüche haben vorteilhafte Weiterbildungen der Erfindung zum Inhalt.

Vorteilhafterweise ist das Gehäuse als kreisförmiger Rohrabschnitt ausgebildet. Dies vereinfacht die Herstellung des Gehäuses, da der Rohrabschnitt nicht weiter nachbearbeitet zu werden braucht.

Gemäß einer bevorzugten Ausgestaltung sind die Hydraulikkanäle als nach außen offene Nuten ausgebildet, die in den Außenumfang des Zwischenteils eingebracht sind. Derartige Nuten sind leicht herstellbar. In zusammengebautem Zustand werden dann die nach außen offenen Nuten durch das als Rohrabschnitt ausgebildete Gehäuse abgedeckt, so dass im Zusammenspiel von Rohrabschnitt und Zwischenteil geschlossene Hydraulikkanäle entstehen.

Die Steuerbohrungen sind vorteilhafterweise ebenfalls von außen in das Zwischenteil eingebracht. Dies trägt zu einer kostengünstigen Herstellung des erfindungsgemäßen Dämpfers bei, da bisher die Steuerbohrungen von innen gebohrt werden mussten. Alternativ konnten sie zwar auch von außen gebohrt werden, mussten dann aber wieder mit hohem Aufwand verschlossen werden. Dies fällt bei dem erfindungsgemäßen Dämpfer weg, da die von außen eingebrachten Steuerbohrungen im zusammengebauten Zustand durch den Rohrabschnitt abgedeckt werden.

Wenn bei der Konstruktion darauf geachtet wird, dass weder Innenbohrungen noch Hinterschneidungen erforderlich sind, kann das Zwischenteil entweder ein Spritzgussteil, vorzugsweise aus Aluminium, aus Zinkdruckguss oder aus Kunststoff, oder ein Drehteil sein.

Gemäß einer vorteilhaften Weiterbildung ist in dem Zwischenteil ein Hohlkolben angeordnet. Hierdurch ergeben sich gleiche Flächen für die Stangen- und Kolbenseite, wodurch der Hohlkolben als geschlossenes System ausgeführt werden kann, da die verdrängte Ölmenge jeweils auf der anderen Seite aufgenommen werden kann.

Das Zwischenteil ist vorteilhafterweise an seiner aus dem Zwischenteil herausragenden Seite zur Aufnahme einer Druckrolle ausgebildet.

Alternativ kann das Zwischenteil an seiner aus dem Zwischenteil herausragenden Seite auch einen Gewindeschaft o .dgl. aufweisen. Dies vereinfacht die Herstellung des erfindungsgemäßen Dämpfers weiter.

Auch der Hohlkolben kann ein Spritzgussteil, vorzugsweise aus Aluminium, aus Zinkdruckguss oder aus Kunststoff, oder ein Drehteil sein.

Gemäß einer vorteilhaften Weiterbildung ist in dem Hohlkolben ein Innenteil angeordnet, welches Steuer- und/oder Rückschlagventile beinhaltet.

Wenn bei der Konstruktion darauf geachtet wird, dass weder Innenbohrungen noch Hinterschneidungen erforderlich sind, kann das Innenteil ebenfalls entweder ein Spritzgussteil, vorzugsweise aus Aluminium, aus Zinkdruckguss oder aus Kunststoff, oder ein Drehteil sein.

Weitere Einzelheiten, Merkmale und Vorteile der Erfindung ergeben sich aus nachfolgender Beschreibung anhand der Zeichnungen. Es zeigen:
Figur 1 eine Explosionsdarstellung eines erfindungsgemäßen Dämpfers,
Figur 2 einen Längsschnitt durch den erfindungsgemäßen Dämpfer,

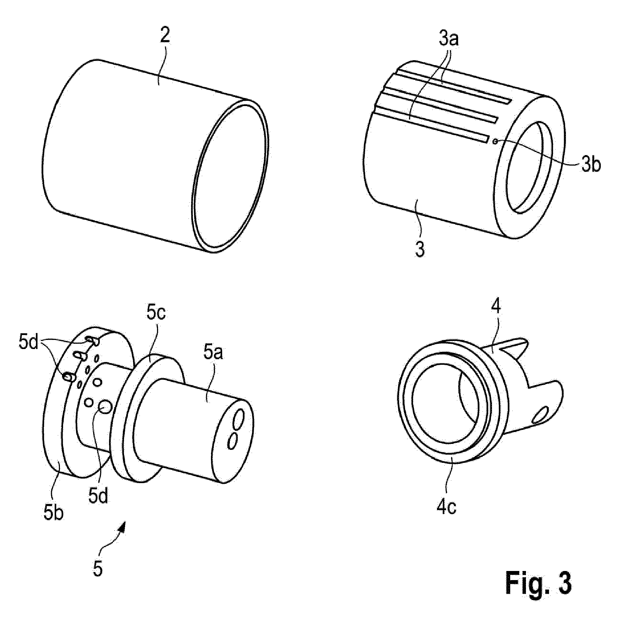

Figur 3 perspektivische Ansichten der Einzelteile des erfindungsgemäßen Dämpfers, und
Figur 4 eine perspektivische Ansicht eines mit einem erfindungsgemäßen Dämpfer versehenen Türschließers.

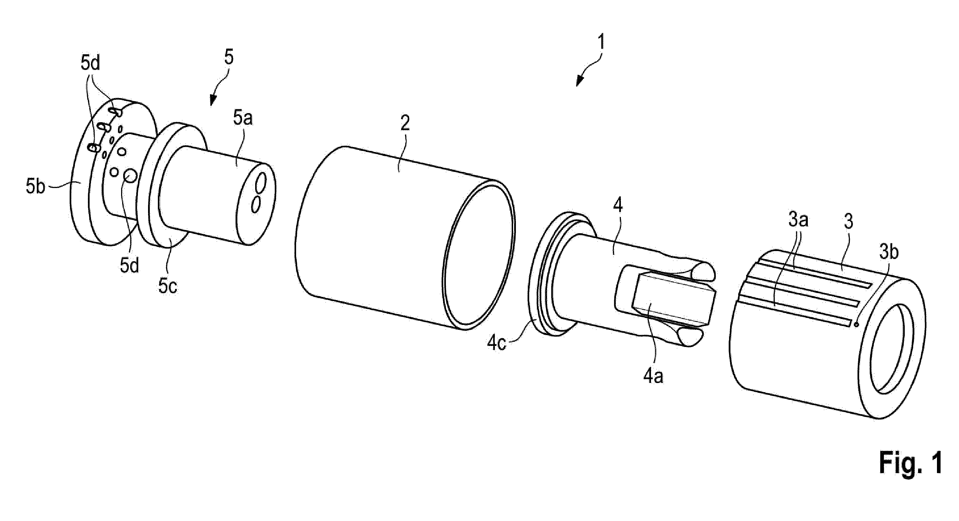

In Figur 1 ist ein erfindungsgemäßer Dämpfer 1 in einer Explosionsdarstellung gezeigt, welche seine wesentlichen Bestandteile zeigt.

Der erfindungsgemäße Dämpfer 1 besteht im Wesentlichen aus einem Gehäuse 2, einem Zwischenteil 3, einem Hohlkolben 4 und einem Innenteil 5.

Das Gehäuse 2 bildet die Außenhülle des Dämpfers 1 und nimmt den größten Teil der in seinem Inneren herrschenden Druckkräfte auf. Da das Gehäuse 2 erfindungsgemäß frei von Steuerbohrungen und Hydraulikkanälen ist, kann es von einem einfachen kreisförmigen Rohrabschnitt gebildet werden, der nicht weiter nachbearbeitet zu werden braucht.

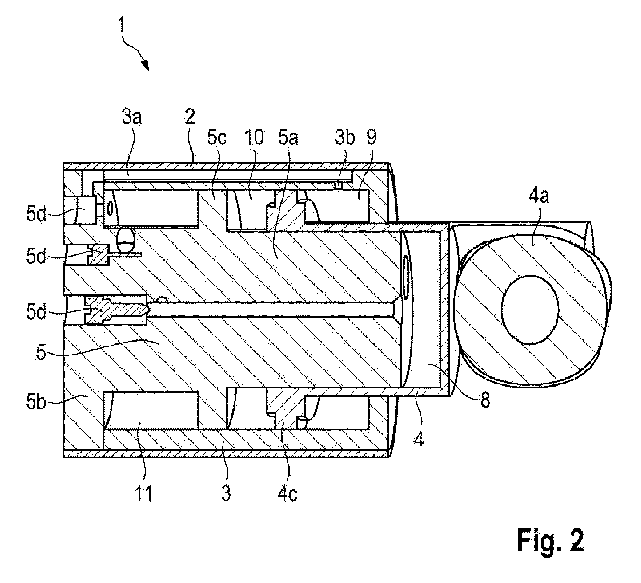

In das Gehäuse 2 ist das im Wesentlichen topfförmig ausgestaltete Zwischenteil 3 eingesetzt. Da das Gehäuse 2 bzw. der Rohrabschnitt den größten Teil der Druckkräfte aufnehmen, kann das Zwischenteil 3 ein Spritzgussteil, vorzugsweise aus Aluminium, aus Zinkdruckguss oder aus Kunststoff, oder ein Drehteil sein. Das Zwischenteil 3 ist auf seiner Außenfläche mit längsverlaufenden Nuten versehen, welche im Zusammenspiel mit dem als Rohrabschnitt ausgebildeten Gehäuse 2 Hydraulikkanäle 3a bilden (Figur 2). Von den Hydraulikkanälen 3a zweigen radial verlaufende Steuerbohrungen 3b (Figur 2) ab, die infolge der erfindungsgemäßen Ausgestaltungen von der Außenseite her in das Zwischenteil 3 eingebracht werden können. Denn sobald das Zwischenteil 3 in das Gehäuse 2 eingesetzt ist, dichtet das Gehäuse 2 die Steuerbohrungen 3b nach außen ab.

In das Zwischenteil 3 ist der Hohlkolben 4 eingesetzt, der ebenfalls ein Spritzgussteil, vorzugsweise aus Aluminium, aus Zinkdruckguss oder aus Kunststoff, oder ein Drehteil sein kann.

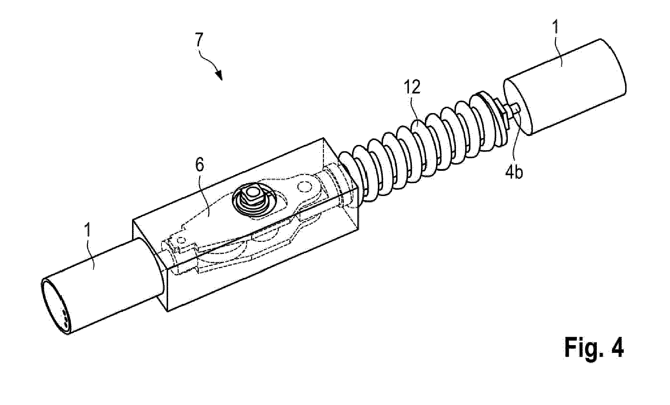

Der Hohlkolben 4 ragt teilweise durch eine Öffnung im Boden des topfförmigen Zwischenteils 3 heraus und ist an seiner aus dem Zwischenteil 3 herausragenden Seite zur Aufnahme einer Druckrolle 4a ausgebildet, mit welcher er mit einer Drehmomenterzeugungseinheit 6 eines Türschließers 7 in Wirkverbindung treten kann (Figur 4). Alternativ kann der Hohlkolben 4 auch an seiner aus dem Zwischenteil 3 herausragenden Seite einen Gewindeschaft 4b (Figur 4) o .dgl. aufweisen.

Der Hohlkolben 4 ist an seinem von der Druckrolle 4a abgewandten Ende mit einem radial umlaufenden und nach außen abstehenden Flansch 4c versehen, mit welchem er an der Innenwandung des Zwischenteils 3 anliegt.

Das Innenteil 5, das ebenfalls ein Spritzgussteil, vorzugsweise aus Aluminium, aus Zinkdruckguss oder aus Kunststoff, oder ein Drehteil sein kann, weist einen zylindrischen Grundkörper 5a auf, der teilweise in den Hohlkolben 4 hinein ragt. An seinem dem Hohlkolben 4 abgewandten Ende ist an den Grundkörper 5a ein tellerförmiger Deckel 5b angeformt, der das topfförmige Zwischenteil 3 abdeckt. Der Außendurchmesser des Deckels 5b entspricht dabei dem Innendurchmesser des Gehäuses 2, so dass der Deckel 5b in das Gehäuse 2 eingesetzt werden kann. Des Weiteren weist der Grundkörper 5a mit Abstand zu dem Deckel 5b einen radial umlaufenden und nach außen abstehenden Flansch 5c versehen, der an der Innenwandung des Zwischenteils 3 anliegt.

In dem Innenteil 5 sind weiterhin Steuer- und Rückschlagventile 5d angeordnet (Figur 2).

Da die Hydraulikkanäle 3a und die Steuerbohrungen 3b in dem Zwischenteil 3, die Steuer- und Rückschlagventile 5d jedoch in dem Innenteil 5 angeordnet sind, können durch ein Verdrehen des Innenteils 5 zum Zwischenteil 3 verschiedene Hydraulikkanäle 3a bzw. Steuerbohrungen 3b verdeckt oder frei gegeben werden, wodurch ein Freischalten verschiedener Funktionen oder verschiedene Ausbaustufen bei gleichen Teilen möglich sind.

In zusammengebautem Zustand (Figur 2) wird zwischen dem Hohlkolben 4 und dem Grundkörper 5a des Innenteils 5 ein erster Druckraum 8 und zwischen dem Hohlkolben 4 und dem Zwischenteil 3 ein zweiter Druckraum 9 gebildet. Weiterhin ist zwischen dem Flansch 4c des Hohlkolbens 4 und dem Flansch 5c des Innenteils 5 ein Freiraum 10 ausgebildet, der an seiner Außenseite von dem Zwischenteil 3 begrenzt ist und der eine Bewegung des Hohlkolbens 4 ermöglicht. Außerdem kann zwischen dem Deckel 5b und dem Flansch 5c ein Tankraum 11 ausgebildet sein, der an seiner Außenseite ebenfalls von dem Zwischenteil 3 begrenzt ist. Jedoch ist der Tankraum 11 nicht zwingend erforderlich, da im dargestellten Ausführungsbeispiel gleiche Flächenverhältnisse im Hohlkolben 4 herrschen.

Figur 4 zeigt den erfindungsgemäßen Dämpfer 1 zusammen mit dem Türschließer 7. Der Türschließer 7 ist hier nur schematisch mit den im vorliegenden Zusammenhang erforderlichen Elementen dargestellt. Die Drehmomenterzeugungseinrichtung 6, die einseitig von einer Feder 12 beaufschlagt ist, weist auf beiden Seiten einen erfindungsgemäßen Dämpfer 1 auf, wobei der eine Dämpfer 1 als Öffnungsdämpfer und der andere Dämpfer 1 als Schließdämpfer wirkt. Der eine Dämpfer 1 - in Figur 4 der linke - ist mit der Druckrolle 4a versehen, welche auf die Drehmomenterzeugungseinheit 6 einwirkt, während der andere Dämpfer 1 - in Figur 4 der rechte - den Gewindeschaft 4b aufweist.

Der erfindungsgemäße hydraulische Dämpfer 1 wirkt beidseitig und kann nicht nur bei Türschließern, sondern auch bei Türantrieben eingesetzt werden. Er kann sowohl als Öffnungsdämpfer, als auch als Schließdämpfer verwendet werden. Darüber hinaus ermöglicht er das Schließen mit zwei Schließbereichen sowie eine Schließverzögerung. Er kann auch als Endanschlag dienen. Schließlich kann der erfindungsgemäße hydraulische Dämpfer 1 auch bei verschiedenen Türschließervarianten eingesetzt werden, da es als modulares Bauteil konzipiert ist.
Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste

- 1: Dämpfer
- 2: Gehäuse
- 3: Zwischenteil
- 3a: Hydraulikkanal
- 3b: Steuerbohrung
- 4: Hohlkolben
- 4a: Druckrolle
- 4b: Gewindeschaft
- 4c: Flansch
- 5: Innenteil
- 5a: Grundkörper
- 5b: Deckel
- 5c: Flansch
- 5d: Steuer- und Rückschlagventile
- 6: Drehmomenterzeugungseinheit
- 7: Türschließer
- 8: erster Druckraum
- 9: zweiter Druckraum
- 10: Freiraum
- 11: Tankraum
- 12: Feder

## Patentansprüche

1. Hydraulischer Dämpfer mit einem Gehäuse, insbesondere für einen Türschließer, **dadurch gekennzeichnet, dass** das Gehäuse (2) frei von Steuerbohrungen und Hydraulikkanälen ist, und dass in das Gehäuse (2) ein Zwischenteil (3) eingesetzt ist, welches die Steuerbohrungen (3b) und die Hydraulikkanäle (3a) aufweist.

2. Hydraulischer Dämpfer nach Anspruch 1, **dadurch gekennzeichnet, dass** das Gehäuse (2) als kreisförmiger Rohrabschnitt ausgebildet ist.

3. Hydraulischer Dämpfer nach einem der vorhergehenden Ansprüche, **dadurch gekennzeichnet, dass** die Hydraulikkanäle (3a) als nach außen offene Nuten ausgebildet sind, die in den Außenumfang des Zwischenteils (3) eingebracht sind.

4. Hydraulischer Dämpfer nach einem der vorhergehenden Ansprüche, **dadurch gekennzeichnet, dass** die Steuerbohrungen (3b) von außen in das Zwischenteil (3) eingebracht sind.

5. Hydraulischer Dämpfer nach einem der vorhergehenden Ansprüche, **dadurch gekennzeichnet, dass** das Zwischenteil (3) ein Spritzgussteil, vorzugsweise aus Aluminium, aus Zinkdruckguss oder aus Kunststoff ist.

6. Hydraulischer Dämpfer nach einem der Ansprüche 1 bis 4, **dadurch gekennzeichnet, dass** das Zwischenteil (3) ein Drehteil ist.

7. Hydraulischer Dämpfer nach einem der vorhergehenden Ansprüche, **dadurch gekennzeichnet, dass** in dem Zwischenteil (3) ein Hohlkolben (4) angeordnet ist.

8. Hydraulischer Dämpfer nach Anspruch 7, **dadurch gekennzeichnet, dass** der Hohlkolben (4) an seiner aus dem Zwischenteil (3) herausragenden Seite zur Aufnahme einer Druckrolle (4a) ausgebildet ist.

9. Hydraulischer Dämpfer nach Anspruch 7, **dadurch gekennzeichnet, dass** der Hohlkolben (4) an seiner aus dem Zwischenteil (3) herausragenden Seite einen Gewindeschaft (4b) o .dgl. aufweist.

10. Hydraulischer Dämpfer nach einem der Ansprüche 7 bis 9, **dadurch gekennzeichnet, dass** der Hohlkolben (4) ein Spritzgussteil, vorzugsweise aus Aluminium, aus Zinkdruckguss oder aus Kunststoff ist.

11. Hydraulischer Dämpfer nach einem der Ansprüche 7 bis 9, **dadurch gekennzeichnet, dass** der Hohlkolben (4) ein Drehteil ist.

12. Hydraulischer Dämpfer nach einem der Ansprüche 7 bis 11, **dadurch gekennzeichnet, dass** in dem Hohlkolben (4) ein Innenteil (5) angeordnet ist, welches Steuer- und/oder Rückschlagventile (5d) beinhaltet.

13. Hydraulischer Dämpfer nach Anspruch 12, **dadurch gekennzeichnet, dass** das Innenteil (5) ein Spritzgussteil, vorzugsweise aus Aluminium, aus Zinkdruckguss oder aus Kunststoff ist.

14. Hydraulischer Dämpfer nach Anspruch 12, **dadurch gekennzeichnet, dass** das Innenteil (5) ein Drehteil ist.
